# EUROPEAN PATENT SPECIFICATION

(11) **EP 3 392 867 B1**
(45) Date of publication and mention of the grant of the patent: **05.04.2023**
(21) Application number: 17200424.4
(22) Date of filing: 07.11.2017
(51) Int. Cl.: G09G 3/20

(54) **DISPLAY CONTROL METHOD AND DEVICE**
ANZEIGESTEUERUNGSVERFAHREN UND -VORRICHTUNG
PROCÉDÉ ET DISPOSITIF DE COMMANDE D'AFFICHAGE

(30) Priority: 19.04.2017 CN 201710258259
(43) Date of publication of application: 24.10.2018
(73) Proprietor: Beijing Xiaomi Mobile Software Co., Ltd., Beijing 100085 (CN)
(72) Inventor: LI, Guosheng, Beijing, Beijing 100085 (CN); JI, Donglei, Beijing, Beijing 100085 (CN)
(74) Representative: dompatent von Kreisler Selting Werner - Partnerschaft von Patent- und Rechtsanwälten mbB

(56) References cited:
- CN-A- 106 155 620
- US-A1- 2012 050 307
- US-A1- 2013 249 404
- US-A1- 2017 011 678
- US-A1- 2017 039 919
- US-A1- 2017 039 925

## Description

### TECHNICAL FIELD

The present disclosure generally relates to a terminal technology field, and more particularly, to a display control method and a display control device.

### BACKGROUND

In order to reduce damage of a screen to a user, a screen of an existing display device has an eye protection mode, and after the user enables the eye protection mode manually, brightness of the screen can be reduced, thus avoiding damage to eyes of the user.

However, in the related art, on one hand, the user needs to manually enable the eye protection mode, which is difficult for the user to perform the operation for enabling the eye protection mode when the existing display device has too much functions; on other hand, only brightness of blue light is reduced, such that the displayed picture appears to be yellowish, thus resulting in low viewing experience of the user.

Document CN 106155620 A discloses a control method used for controlling display color of a display screen of an electronic device.

Document US 2017039919 A1 discloses an electronic device capable of displaying and performing color compensation, and a color compensation method.

Document US 2017011678 A1 discloses a display device, a television set and a control method thereof.

Document US 2012/050307 A1 describes a method for controlling characteristics of an electronic device based on ambient light levels is provided. The method includes receiving light at an ambient light sensor of the device and measuring components, such as color components, of the visible light. The brightness level of a light source in the device or color output of the device may be controlled based on the measuring components.

Document US 2013/249404 A1 discloses an LED washlight component.

### SUMMARY

Embodiments of the present disclosure provide a display control method and a display control device to solve the problems in the related art.

The present invention is defined by the appendant claims. Further details of the present invention are defined in the dependent claims.

The technical solutions provided in embodiments of the present disclosure have following advantageous effects. According to embodiments of the present disclosure, when the display panel is in the low brightness mode, the eye protection mode is enabled automatically to further reduce the color component damaging eyes of the user in the display panel, such that the user needs not to operate manually, thereby avoiding a situation that most of users who are unfamiliar with functions of the display panel cannot protect their eyes effectively because the above adjustment function is not found or cannot be found. Therefore, a scope of protecting the user is greatly improved.

When brightness of the blue sub-pixel in the pixel unit is reduced, brightness of the other sub-pixels in the pixel unit can be adjusted according to the blackbody trajectory, so that a chromaticity of light emitted by the adjusted pixel unit still changes with a trend of the blackbody trajectory. In this way, the displayed color of the pixel unit will not show an obvious color cast, and the viewing effect of the user will not be affected while blue light is reduced to protect eyes of the user.

It is to be understood that both the foregoing general description and the following detailed description are exemplary and explanatory only and are not restrictive of the present disclosure, as claimed.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart illustrating a display control method according to an example.
Fig. 2 is a flow chart illustrating a display control method according to another example.
Fig. 3 is a schematic diagram illustrating a blackbody trajectory according to an example.
Fig. 4 is a flow chart illustrating a display control method according to an embodiment.
Fig. 5 is a flow chart illustrating a display control method according to another example.
Fig. 6 is a flow chart illustrating a display control method according to another example.
Fig. 7 is a flow chart illustrating a display control method according to another example.
Fig. 8 is a flow chart illustrating a display control method according to another example.
Fig. 9 is a block diagram illustrating a display control device according to an embodiment.
Fig. 10 is a block diagram illustrating a display control device according to another embodiment.
Fig. 11 is a block diagram illustrating a display control device according to another embodiment.
Fig. 12 is a block diagram illustrating a display control device according to an example.

### DETAILED DESCRIPTION

Reference will now be made in detail to example embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the present disclosure. Instead, they are merely examples of apparatuses and methods consistent with aspects related to the present disclosure as recited in the appended claims.

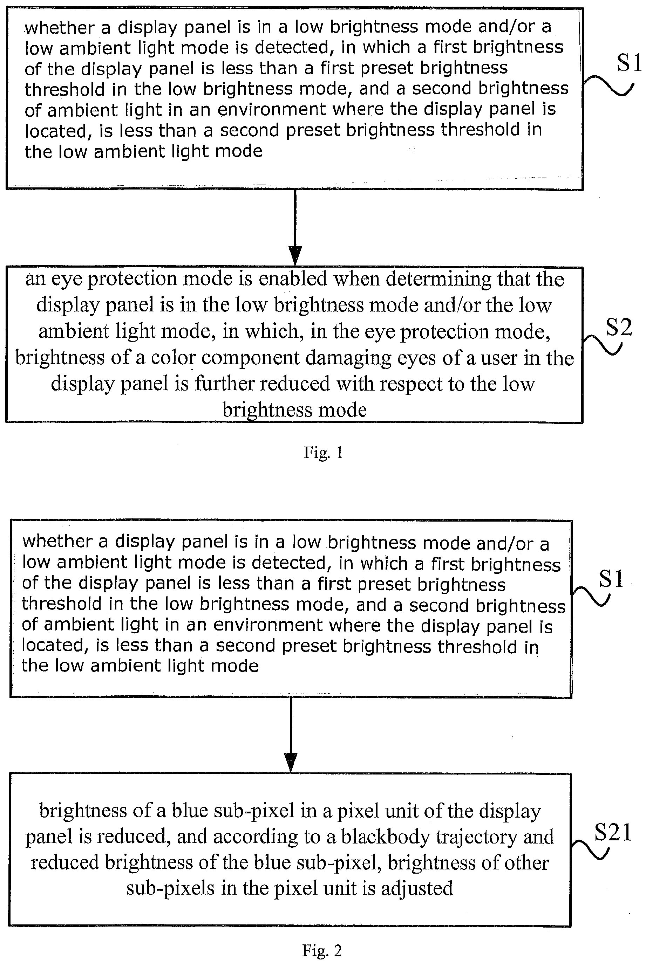

Fig. 1 is a flow chart illustrating a display control method according to an example. The method can be used to control a display panel, in which, the display panel is applicable to a mobile phone, a tablet computer, a television and other devices. As illustrated in Fig. 1, the method includes block S1 and block S2.

In block S1, whether a display panel is in a low brightness mode and a low ambient light mode is detected, in which a first brightness of the display panel in the low brightness mode is less than a first preset brightness threshold, and a second brightness of the ambient light in an environment where the display panel is located, is less than a second preset brightness threshold in the low ambient light mode.

In an embodiment, ambient light can be received through a photoelectric sensor, an induced current is generated, and the second brightness of ambient light can be determined according to a magnitude of the induced current.

In an embodiment, the display panel may be a liquid crystal display panel, in this case, the first brightness of the display panel can be determined by detecting brightness of a backlight module.

In an embodiment, the display panel may be an organic light emitting diode display panel (that is, OLED), in this case, the first brightness of the display panel can be determined by detecting drive current of sub-pixels in a pixel unit.

It should be noted that, the way to detect the first brightness and the second brightness is not limited to the above-described ways, and detection ways can be selected as needed and according to a device on which the display panel is located.

In an embodiment, the display panel can adjust its brightness according to brightness of the ambient light. For example, when the second brightness of the ambient light is less than the second preset brightness threshold, brightness of the display panel may be adjusted to be less than the first preset brightness threshold, that is, adjusted to be in the low brightness mode, however, this adjustment process may take some time to complete. Therefore, besides the case that brightness of the display panel is less than the first preset brightness threshold, in a case that brightness of the ambient light is less than the second preset brightness threshold, or in a case that brightness of the display panel is less than the first preset brightness threshold and brightness of the ambient light is less than the second preset brightness threshold, the display panel may be determined to be in the low brightness mode, such that an eye protection mode can be enabled in time.

In an embodiment, the first preset brightness threshold and the second brightness threshold may be set as desired.

For example, the first preset brightness threshold may be greater than or equal to 1 nit, and less than or equal to 1.8 nit, preferably, may be set to be 1.5 nit. For example, the second preset brightness threshold may be greater than or equal to 0.08 lux, and less than or equal to 0.12 lux, preferably, may be set to be 0.1 lux.

In block S2, an eye protection mode is enabled when determining that the display panel is in the low brightness mode and the low ambient light mode, in which, in the eye protection mode, brightness of a color component damaging eyes of a user in the display panel is further reduced with respect to the low brightness mode.

In an embodiment, when a pixel unit of the display panel includes a red sub-pixel, a green sub-pixel and a blue sub-pixel, the color component can be reduced by reducing brightness of the blue sub-pixel. However, when the pixel unit of the display panel includes sub-pixels with other colors, the way to reduce the color component can be adjusted accordingly. For example, when the pixel unit of the display panel includes a cyan sub-pixel, a magenta sub-pixel and a yellow sub-pixel, the color component can be reduced by reducing brightness of the cyan sub-pixel and brightness of the magenta sub-pixel. Hereinafter, embodiments of the present disclosure will be described by assuming that the pixel unit includes the red sub-pixel, the green sub-pixel and the blue sub-pixel.

In an embodiment, when the display panel is in the low brightness mode and the low ambient light mode, that is, when brightness of the display panel is low and brightness of the ambient light is low, the eye protection mode is enabled automatically, so as to further reduce the color component damaging eyes of the user in the display panel, such that the user needs not to operate manually, thereby avoiding a situation that most of users who are unfamiliar with functions of the display panel cannot protect their eyes effectively because the above adjustment function is not found or cannot be found. Therefore, a scope of protecting the user is greatly improved.

Fig. 2 is a flow chart illustrating a display control method according to another example. As illustrated in Fig. 2, based on the example illustrated in Fig. 1, enabling an eye protection mode includes block S21.

In block S21, brightness of a blue sub-pixel in a pixel unit of the display panel is reduced, and according to a blackbody trajectory and reduced brightness of the blue sub-pixel, brightness of other sub-pixels in the pixel unit is adjusted.

In an embodiment, the pixel unit can include the red sub-pixel, the green sub-pixel and the blue sub-pixel, and can further include a white sub-pixel, and the number of sub-pixels with each color may be set as desired, which is not limited in the present disclosure.

In an embodiment, the first brightness can be reduced by the user by adjusting brightness of the display panel manually, or can be reduced automatically after the display panel senses that brightness of ambient light is reduced.

In an embodiment, the first brightness is less than a first preset brightness threshold, that is, brightness of the display panel is low, and the second brightness is less than a second preset brightness threshold, that is, brightness of the ambient light is low. In one of the above cases or when both cases coexist, a sensitivity of human eyes to the color may be reduced, and too bright light will cause great damage to the human eyes. And, strong blue light can cause great damage to a retina, which may cause dry eye, eye strain or biological clock disorder, and even cause eye macular degeneration and visual impairment, and blue light may also interfere with secretion of melatonin of human body, thereby causing difficulty in falling asleep.

Therefore, when both cases coexist, brightness of a blue sub-pixel in a pixel unit of the display panel is reduced. However, when only brightness of the blue sub-pixel is reduced, a yellow (i.e., complementary color of blue) color cast occurs in a color of a displayed picture, thus causing the picture to turn yellow. Therefore, according to a blackbody trajectory and reduced brightness of the blue sub-pixel, brightness of other sub-pixels in the pixel unit is further adjusted.

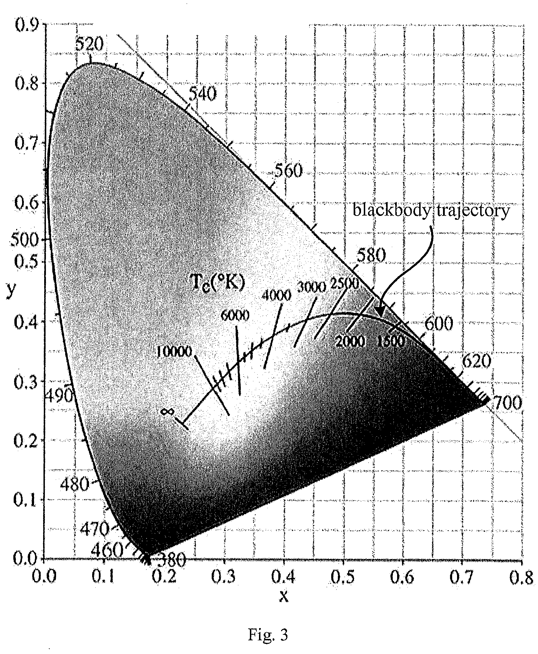

Fig. 3 is a schematic diagram illustrating a blackbody trajectory according to an example.

As illustrated in Fig. 3, in a CIE chromaticity diagram, the lower left has a color of blue, the lower right has a color of red, and the upper has a color of green, the blackbody trajectory represents a chromaticity curve of the blackbody (planckian radiator) at different temperatures in the CIE chromaticity diagram. When the displayed color is adjusted to be a point on the blackbody trajectory, human eyes can see the white color.

When brightness of the blue sub-pixel in the pixel unit is reduced, brightness of the other sub-pixels in the pixel unit can be adjusted (such as, increasing brightness of some sub-pixels, or reducing brightness of some sub-pixels) according to the blackbody trajectory, so that a chromaticity of light emitted by the adjusted pixel unit still changes with a trend of the blackbody trajectory. For example, for the pixel unit that emits white light, a chromaticity of white light emitted by the adjusted pixel unit is still on the blackbody trajectory, such that the displayed color of the pixel unit will not show an obvious color cast, and viewing effect of the user will not be affected while blue light is reduced to protect eyes of the user.

It should be noted that, the display panel may have a switch for allowing the user to enable and disable the above-described adjustment function manually. Based on this, it can be set by the user to perform the above automatic adjustment, or not to perform the above automatic adjustment.

In at least one embodiment, a time factor can be further considered, that is, when the first brightness is less than the first preset brightness threshold, and/or the second brightness is less than the second preset brightness threshold, and/or in a preset time period, brightness of a blue sub-pixel in a pixel unit of the display panel is reduced, and according to the blackbody trajectory and reduced brightness of the blue sub-pixel, brightness of other sub-pixels in the pixel unit is adjusted.

In an embodiment, the preset time period may be set by the user in advance, in which, the preset time period may be a night time period, such as 22:00 to 24:00. When it is in the preset time period, it may be determined that the user is about to turn off a light and go to sleep, that is, the user may use the mobile phone in bed. Therefore, the above adjustment can be performed during this time period, so as to ensure that the eyes can be protected and that the viewing effect of the user is barely affected when the user uses the mobile phone in bed with the light off.

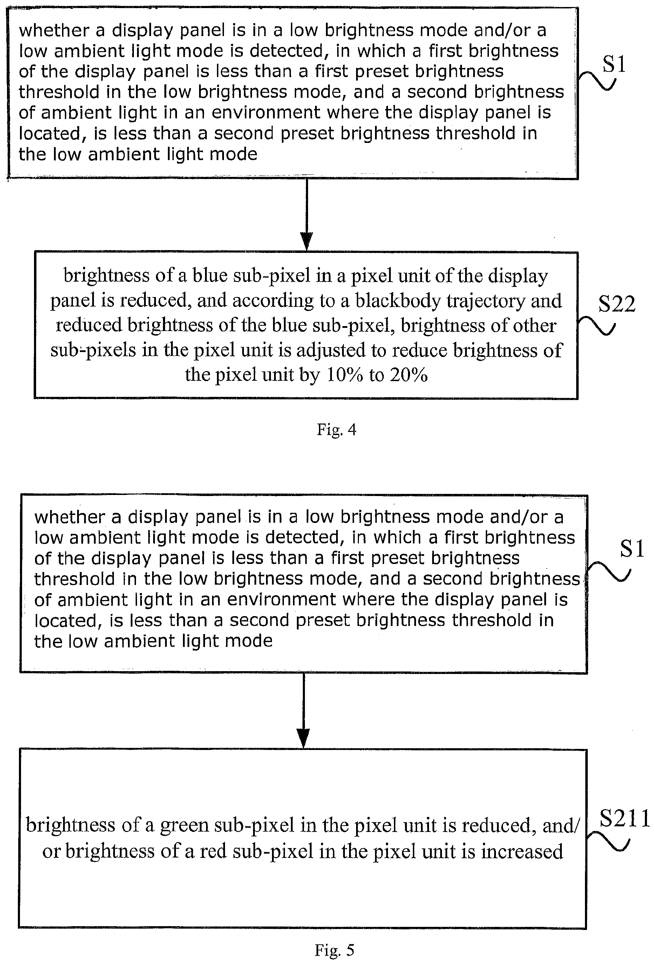

Fig. 4 is a flow chart illustrating a display control method according to the present invention with respect to the "and" combination as indicated in block S22 of Fig. 4. As illustrated in Fig. 4, based on embodiments illustrated in Fig. 1, enabling the eye protection mode includes block S22.

In block S22, brightness of a blue sub-pixel in a pixel unit of the display panel is reduced, and according to a blackbody trajectory and reduced brightness of the blue sub-pixel, brightness of other sub-pixels in the pixel unit is adjusted to reduce brightness of the pixel unit by 10% to 20%.

In an embodiment, although an influence to the viewing effect of the user is reduced while the eyes of the user can be protected effectively by reducing brightness of the blue sub-pixel in the pixel unit and adjusting brightness of other sub-pixels according to embodiments illustrated in Fig. 1, if a result of the adjustment causes the brightness of the pixel unit to be reduced too much, the user may be aware that the displayed picture in the display panel is dimmed obviously.

Therefore, brightness of the blue sub-pixel is reduced by reducing brightness of the pixel unit by 10% to 20%, and brightness of other sub-pixels is adjusted, so that brightness of the pixel unit will be reduced to a lesser extent, thereby further reducing the influence to the viewing effect of the user after brightness of the sub-pixel in the pixel unit is adjusted, and even ensuring that the user may not aware of a change of brightness of the pixel unit in some environments.

When the display panel is the liquid crystal display panel, by adjusting voltage of a common electrode of the blue sub-pixel and the other sub-pixels in the pixel unit, deflection of the corresponding liquid crystal can be changed, and then a change degree of the brightness of the blue sub-pixel and brightness of other sub-pixels can be controlled.

When the display panel is the organic light emitting diode display panel, the change degree of the brightness of the blue sub-pixel and brightness of other sub-pixels can be controlled by adjusting the drive current of the blue sub-pixel and the other sub-pixels in the pixel unit.

Fig. 5 is a flow chart illustrating a display control method according to another example. As illustrated in Fig. 5, based on the example illustrated in Fig. 2, adjusting brightness of other sub-pixels in the pixel unit includes block S211.

In block S211, brightness of a green sub-pixel in the pixel unit is reduced, and/or brightness of a red sub-pixel in the pixel unit is increased.

In an embodiment, taking the pixel unit that emits white light as an example, the chromaticity of the white light emitted by the pixel unit before the adjustment is on the blackbody trajectory illustrated in Fig. 3. However, when brightness of the blue sub-pixel is reduced, in order to make the chromaticity of light emitted by the adjusted pixel unit still on the blackbody trajectory, brightness of the green sub-pixel can be reduced, and/or brightness of the red sub-pixel can be increased, so that the chromaticity of the light emitted by the adjusted pixel unit is still on the blackbody trajectory, but just moved to right, thereby ensuring that the chromaticity of the light emitted by the pixel unit that is viewed by the user barely changes, and reducing the influence to the viewing effect of the user.

Taking the liquid crystal display panel as an example, transmittance of the blue sub-pixel and the green sub-pixel can be reduced by reducing voltages of pixel electrodes in the blue sub-pixel and the green sub-pixel, so as to reduce brightness of both. For example, the voltage of the pixel electrode in the blue sub-pixel can be reduced by 20%, the voltage of the pixel electrode in the green sub-pixel can be reduced by 10%, and/or brightness of the red sub-pixel can be increased by 5%.

In an embodiment, for a pixel unit that emits colored light (such as yellow light, green light, etc.), similar to the pixel unit that emits white light, brightness of the blue sub-pixel, the green sub-pixel, and/or the red sub-pixel may be adjusted in the same way and range.

Taking a pixel unit that emits green light as an example, chromaticity of green light is not located on the blackbody trajectory illustrated in Fig. 3 before the adjustment, but is located on an upper area of the blackbody trajectory. When brightness of the blue sub-pixel is reduced, in order to make the chromaticity of the light emitted by the adjusted pixel unit still change with the trend of the blackbody trajectory, i.e., move to right in the CIE chromaticity diagram, brightness of the green sub-pixel can be reduced, or brightness of the red sub-pixel can be increased, or brightness of the green sub-pixel can be reduced and brightness of the red sub-pixel can be increased, so that the chromaticity of light emitted by the adjusted pixel unit is similar to that before the adjustment, thereby ensuring that the chromaticity of the light emitted by the pixel unit that is viewed by the user barely changes, and reducing the influence to the viewing effect of the user.

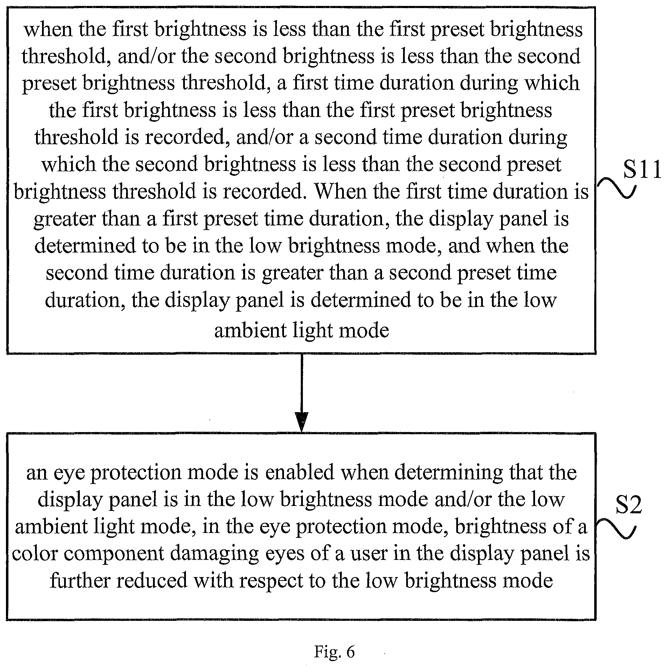

Fig. 6 is a flow chart illustrating a display control method according to another example. As illustrated in Fig. 6, based on the example illustrated in Fig.1, determining whether the display panel is in the low brightness mode and/or the low ambient light mode includes block S11.

In block S11, when the first brightness is less than the first preset brightness threshold, and/or the second brightness is less than the second preset brightness threshold, a first time duration during which the first brightness is less than the first preset brightness threshold is recorded, and/or a second time duration during which the second brightness is less than the second preset brightness threshold is recorded. When the first time duration is greater than a first preset time duration, the display panel is determined to be in the low brightness mode, and when the second time duration is greater than a second preset time duration, the display panel is determined to be in the low ambient light mode.

According to embodiments of the present disclosure, the above-described process of adjusting brightness of the pixel unit can be performed automatically when the first brightness is less than the first preset brightness threshold and the second brightness is less than the second preset brightness threshold. However, in some cases that the first brightness is less than the first preset brightness threshold and the second brightness is less than the second preset brightness threshold, the user needs not to adjust brightness of the pixel unit. For example, assuming that the user carrying the terminal configured with the display panel, turns off the light and prepares to go out from a bedroom, there may be case that the second brightness is less than the second preset brightness threshold when the user turns off the light, however, the user is about to enter a bright environment, thus there is no need to adjust brightness of the display panel.

Based on this, it is possible to, by determining whether the first time duration during which the first brightness is less than the first preset brightness threshold is long enough (greater than a first preset time duration), and/or whether the second time duration during which the second brightness is less than the second preset brightness threshold is long enough (greater than a second preset time duration), determine whether the user is steadily in the situation where brightness of ambient light is low or brightness of the mobile phone is low. Only when the user is steadily in the situation where brightness of ambient light is low or brightness of the mobile phone is low, an operation of enabling the eye protection mode is executed, and brightness of the blue sub-pixel in the pixel unit of the display panel is reduced. However, when the user is not steadily in the situation where brightness of ambient light is low or brightness of the mobile phone is low, original brightness of the display panel is kept, thereby avoiding misjudging the situation where the user is in and avoiding adjusting brightness of a display screen to enable the eye protection mode.

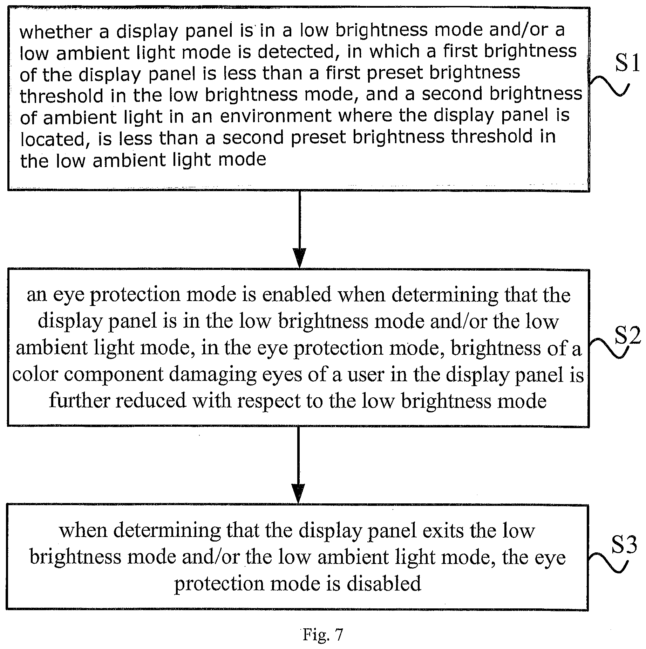

Fig. 7 is a flow chart illustrating a display control method according to another example. As illustrated in Fig. 7, based on the example illustrated in Fig.1, the method further includes block S3.

In block S3, when determining that the display panel exits the low brightness mode and/or the low ambient light mode, the eye protection mode is disabled.

In an embodiment, when the display panel exits the low brightness mode, brightness of the display panel can be returned to a normal level. In this case, the user generally needs to watch a picture with a higher brightness, thus the eye protection mode can be further disabled to ensure the viewing effect of the user.

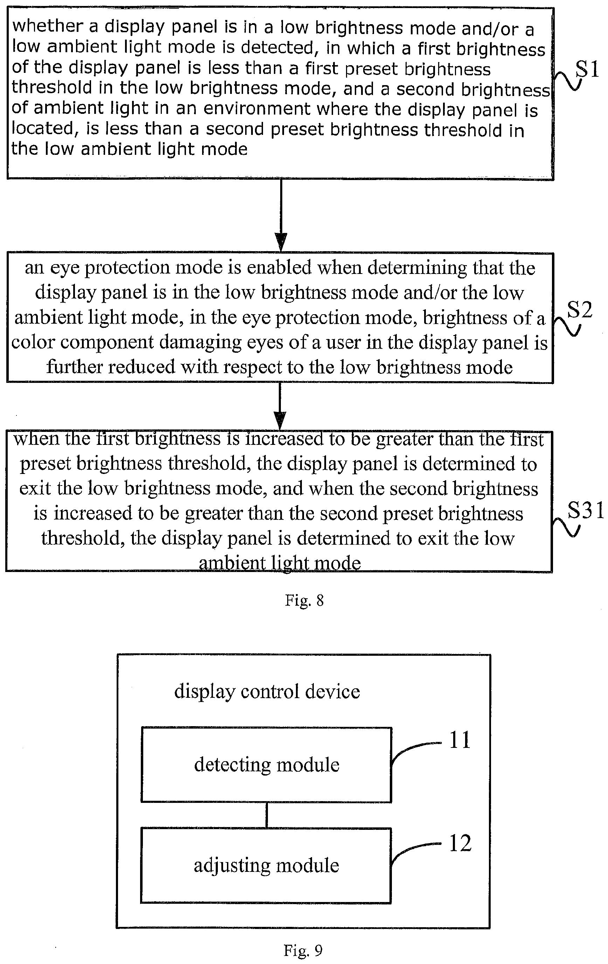

Fig. 8 is a flow chart illustrating a display control method according to another example. As illustrated in Fig. 8, based on the example illustrated in Fig.7, determining that the display panel exits the low brightness mode includes block S31.

In block S31, when the first brightness is increased to be greater than the first preset brightness threshold, the display panel is determined to exit the low brightness mode, and when the second brightness is increased to be greater than the second preset brightness threshold, the display panel is determined to exit the low ambient light mode.

Corresponding to embodiments of the display control method, the present disclosure further provides embodiments of a display control device.

Fig. 9 is a block diagram illustrating a display control device according to an embodiment. As illustrated in Fig. 9, the device includes a detecting module 11 and an adjusting module 12.

The detecting module 11 is configured to detect whether a display panel is in a low brightness mode and a low ambient light mode, in which, first brightness of the display panel in the low brightness mode is less than a first preset brightness threshold, and second brightness of ambient light in an environment where the display panel is in the low ambient light mode is less than a second preset brightness threshold.

The adjusting module 12 is configured to enable an eye protection mode when determining that the display panel is in the low brightness mode and the low ambient light mode, in which, in the eye protection mode, brightness of a color component damaging eyes of a user in the display panel is further reduced with respect to the low brightness mode.

The adjusting module 12 is configured to, when determining that the display panel is in the low brightness mode, reduce brightness of a blue sub-pixel in a pixel unit of the display panel, and adjust brightness of other sub-pixels in the pixel unit according to a blackbody trajectory and reduced brightness of the blue sub-pixel.

According to the invention, the adjusting module 12 is configured to reduce brightness of a blue sub-pixel in a pixel unit of the display panel, and adjust brightness of other sub-pixels in the pixel unit according to a blackbody trajectory and reduced brightness of the blue sub-pixel to reduce brightness of the pixel unit by 10% to 20%.

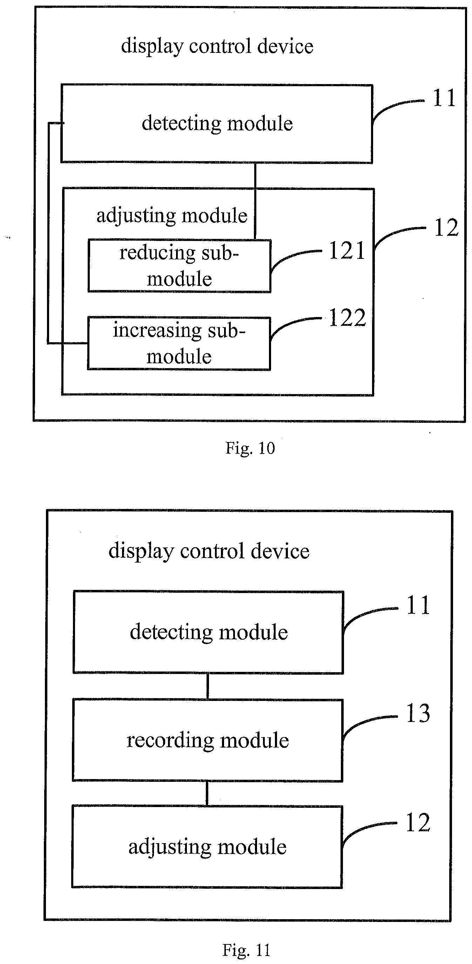

Fig. 10 is a block diagram illustrating a display control device according to another example embodiment. As illustrated in Fig. 10, the adjusting module 12 includes a reducing sub-module 121 and an increasing sub-module 122.

The reducing sub-module 121 is configured to reduce brightness of a green sub-pixel in the pixel unit when the pixel unit emits non-white light.

The increasing sub-module 122 is configured to increase brightness of a red sub-pixel in the pixel unit when the pixel unit emits non-white light.

Fig. 11 is a block diagram illustrating a display control device according to another example embodiment. As illustrated in Fig. 11, based on embodiments illustrated in Fig. 9, the device further includes a recoding module 13.

The recording module 13 is configured to record a first time duration during which the first brightness is less than the first preset brightness threshold, and/or record a second time duration during which the second brightness is less than the second preset brightness threshold.

The detecting module 11 is configured to determine that the display panel is in the low brightness mode when the first time duration is greater than a first preset time duration, and/or determine that the display panel is in the low ambient light mode when the second time duration is greater than a second preset time duration.

In at least one embodiment, the adjusting module is further configured to disable the eye protection mode when determining that the display panel exits the low brightness mode and/or the low ambient light mode.

In at least one embodiment, the adjusting module is further configured to determine that the display panel exits the low brightness mode when the first brightness is increased to be greater than the first preset brightness threshold; and determine that the display panel exists the low ambient light mode when the second brightness is increased to be greater than the second preset brightness threshold.

With respect to the devices in the above embodiments, the specific manners for performing operations for individual modules therein have been described in detail in the embodiments regarding the methods for identifying a gesture, which will not be elaborated herein.

Since the device embodiments substantially correspond to the method embodiments, reference is made to the description of the method embodiments. The above-described device embodiments are merely for the purpose of illustration. Those units described as separated components may or may not be physically separated, and those units described as a display component may or may not be physical units, i.e., either located at one place, or distributed onto a plurality of network units. The object of the present disclosure may be achieved by part or all of modules in accordance with practical requirements. It would be appreciated and executable by those skilled in the art without creative labor.

Accordingly, the present disclosure further provides a display control device, including a processor, a memory configured to store instructions executable by the processor. The processor is configured to: detect whether a display panel is in a low brightness mode and a low ambient light mode, in which, first brightness of the display panel in the low brightness mode is less than a first preset brightness threshold, and second brightness of ambient light in an environment where the display panel is in the low ambient light mode is less than a second preset brightness threshold; enable an eye protection mode when determining that the display panel is in the low brightness mode and the low ambient light mode, in which, in the eye protection mode, brightness of a color component damaging eyes of a user in the display panel is further reduced with respect to the low brightness mode.

Accordingly, the present disclosure further provides a terminal, including a memory having one or more programs stored therein. When the one or more programs are executed by one or more processors, the following instructions can be formed: detecting whether a display panel is in a low brightness mode or a low ambient light mode, in which, first brightness of the display panel in the low brightness mode is less than a first preset brightness threshold, and second brightness of ambient light in an environment where the display panel is in the low ambient light mode is less than a second preset brightness threshold; and enabling an eye protection mode when determining that the display panel is in the low brightness mode or the low ambient light mode, in which, in the eye protection mode, brightness of a color component damaging eyes of a user in the display panel is further reduced with respect to the low brightness mode.

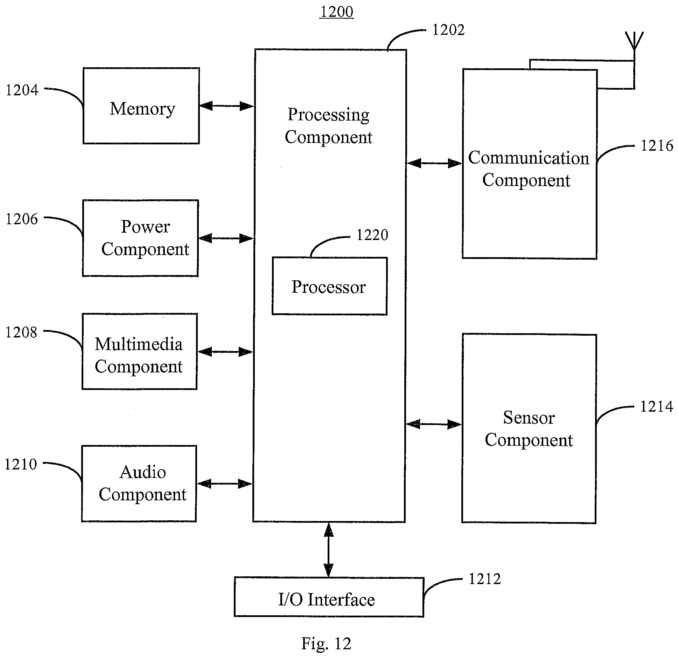

Fig. 12 is a block diagram illustrating a display control device 1200 according to an example. Fox example, the device 1200 may be a mobile phone, a computer, a digital broadcasting terminal, a message transceiver device, a game console, a tablet device, a medical device, a fitness device and a personal digital assistant.

Referring to Fig. 12, the device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the device 1200, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the device 1200. Examples of such data include instructions for any applications or methods operated on the device 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the device 1200. The power component 1206 may include a power management system, one or more power sources, and any other components associated with the generation, management, and distribution of power in the device 1200.

The multimedia component 1208 includes a screen providing an output interface between the device 1200 and the user. In some examples, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some examples, the multimedia component 1208 includes a front-facing camera and/or a rear-facing camera. When the device 1200 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 1210 is configured to output and/or input audio signals. For example, the audio component 1210 includes a microphone ("MIC") configured to receive an external audio signal when the device 1200 is in an operation mode, such as a call mode, a recording mode, and a voice recognition mode. The received audio signal may be further stored in the memory 1204 or transmitted via the communication component 1216. In some examples, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the device 1200. For instance, the sensor component 1214 may detect an open/closed status of the device 1200, relative positioning of components, e.g., a display and a keypad of the device 1200, a change in position of the device 1200 or a component of the device 1200, a presence or absence of user contact with the device 1200, an orientation or an acceleration/deceleration of the device 1200, and a change in temperature of the device 1200. The sensor component 1214 may include a proximity sensor configured to detect the presence of nearby objects without any physical contact. The sensor component 1214 may also include a light sensor, such as a complementary metal-oxide semiconductor (CMOS for short) or a charge coupled device (CCD for short) image sensor, for use in imaging applications. In some examples, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the device 1200 and other devices. The device 1200 can access a wireless network based on a communication standard, such as WiFi, 2G, or 3G, or a combination thereof. In one example, the communication component 1216 receives a broadcast signal or broadcast associated information from an external broadcast management system via a broadcast channel. In one example, the communication component 1216 further includes a near field communication (NFC for short) module to facilitate short-range communications. For example, the NFC module may be implemented based on a radio frequency identification (RFID for short) technology, an infrared data association (IrDA for short) technology, an ultra-wideband (UWB for short) technology, a Bluetooth (BT for short) technology, and other technologies.

In examples, the device 1200 may be implemented with one or more application specific integrated circuits (ASICs for short), digital signal processors (DSPs for short), digital signal processing devices (DSPDs for short), programmable logic devices (PLDs for short), field programmable gate arrays (FPGAs for short), controllers, micro-controllers, microprocessors, or other electronic components, for performing the methods described above.

In examples, there is also provided a non-transitory computer-readable storage medium including instructions, such as included in the memory 1204, executable by the processor 1220 in the device 1200, for performing the above-described methods. For example, the non-transitory computer-readable storage medium may be a read-only memory (ROM for short), a random access memory (RAM for short), a CD-ROM, a magnetic tape, a floppy disk, an optical data storage device, and the like.

Other embodiments of the present disclosure will be apparent to those skilled in the art from consideration of the specification and practice of the present disclosure disclosed here. This application is intended to cover any variations, uses, or adaptations of the present disclosure following the general principles thereof and including such departures from the present disclosure as come within known or customary practice in the art.

## Claims

1. A display control method for a display panel implemented in a display control device, comprising:
detecting (S1) whether the display panel is in a low brightness mode if a first brightness of the display panel is less than a first preset brightness threshold and whether the display panel is in a low ambient mode if a second brightness of an ambient light in an environment where the display panel is located is less than a second preset brightness threshold; and
enabling (S2) an eye protection mode when the first brightness of the display panel is less than the first preset brightness threshold and the brightness of the ambient light in the environment where the display panel is located is less than the second preset brightness threshold;
wherein enabling (S2) the eye protection mode comprises:
reducing (S21) brightness of a blue sub-pixel in a pixel unit of the display panel, and adjusting brightness of one or more other sub-pixels in the pixel unit, according to a blackbody trajectory and reduced brightness of the blue sub-pixel to reduce brightness of the pixel unit by 10% to 20% and to enable a chromaticity of light emitted by the adjusted pixel unit to be similar to a chromaticity of light emitted by the pixel unit before adjustment;
wherein the blackbody trajectory represents a chromaticity curve of a blackbody at different temperatures in a CIE chromaticity diagram.

2. The method according to claim 1, wherein adjusting (S21) brightness of other sub-pixels in the pixel unit comprises:
reducing (S211) brightness of a green sub-pixel in the pixel unit, and/or increasing brightness of a red sub-pixel in the pixel unit.

3. The method according to claim 1 or 2, further comprising:
disabling (S3) the eye protection mode when determining that the display panel exits the low brightness mode and/or the low ambient light mode;
wherein determining (S3) that the display panel exits the low brightness mode comprises:
determining (S31) that the display panel exits the low brightness mode when the first brightness is increased to be greater than the first preset brightness threshold; and
determining (S31) that the display panel exists the low ambient light mode when the second brightness is increased to be greater than the second preset brightness threshold.

4. A display control device for a display panel, comprising:
a detecting module (11), configured to detect whether the display panel is in a low brightness mode if a first brightness of the display panel is less than a first preset brightness threshold and whether the display panel is in a low ambient mode if a second brightness of an ambient light in an environment where the display panel is located is less than a second preset brightness threshold; and
an adjusting module (12), configured to enable an eye protection mode when the first brightness of the display panel is less than the first preset brightness threshold and the brightness of the ambient light in the environment where the display panel is located is less than the second preset brightness threshold;
wherein,
the adjusting module (12) is configured to, when enabling the eye protection mode, reduce brightness of a blue sub-pixel in a pixel unit of the display panel, and adjust brightness of one or more other sub-pixels in the pixel unit, according to a blackbody trajectory and reduced brightness of the blue sub-pixel to reduce brightness of the pixel unit by 10% to 20% and to enable a chromaticity of light emitted by the adjusted pixel unit to be similar to a chromaticity of light emitted by the pixel unit before adjustment;
wherein the blackbody trajectory represents a chromaticity curve of a blackbody at different temperatures in a CIE chromaticity diagram.

5. The device according to claim 4, the adjusting module (12) comprises a reducing sub-module (121) and/or an increasing sub-module (122), wherein
the reducing sub-module (121) is configured to reduce brightness of a green sub-pixel in the pixel unit when the pixel unit emits non-white light; and
the increasing sub-module (122) is configured to increase brightness of a red sub-pixel in the pixel unit when the pixel unit emits non-white light.

6. The device according to claim 4 or 5, wherein,
the adjusting module (12) is further configured to disable the eye protection mode when determining that the display panel exits the low brightness mode and/or the low ambient light mode,
wherein the adjusting module (12) is further configured to determine that the display panel exits the low brightness mode when the first brightness is increased to be greater than the first preset brightness threshold; and determine that the display panel exists the low ambient light mode when the second brightness is increased to be greater than the second preset brightness threshold.

## Patentansprüche

1. Anzeigesteuerungsverfahren für einen Bildschirm, das in einer Anzeigesteuerungsvorrichtung implementiert ist, mit den Schritten:
Erkennen (S1), ob der Bildschirm sich in einem Modus für geringe Helligkeit befindet, wenn eine erste Helligkeit des Bildschirms geringer als ein erster voreingestellter Helligkeitsschwellenwert ist, und ob der Bildschirm sich in einem Modus für geringes Umgebungslicht befindet, wenn eine zweite Helligkeit eines Umgebungslichts in einer Umgebung, in welcher der Bildschirm sich befindet, geringer als ein zweiter voreingestellter Helligkeitsschwellenwert ist; und
Aktivieren (S2) eines Augenschutzmodus, wenn die erste Helligkeit des Bildschirms geringer als der erste voreingestellte Helligkeitsschwellenwert ist und die Helligkeit des Umgebungslichts in der Umgebung, in welcher der Bildschirm sich befindet, geringer als der zweite voreingestellte Helligkeitsschwellenwert ist;
wobei das Aktivieren (S2) des Ausgenschutzmodus den folgenden Schritt aufweist:
Verringern (S21) der Helligkeit eines blauen Sub-Pixels in einer Pixeleinheit des Bildschirms, und Einstellen der Helligkeit eines oder mehrerer anderer Sub-Pixel in der Pixeleinheit entsprechend einer Schwarzkörpertrajektorie und der verringerten Helligkeit des blauen Sub-Pixels, um die Helligkeit der Pixeleinheit um 10% bis 20% zu verringern und zu ermöglichen, dass eine Chromatizität von Licht, welches von der eingestellten Pixeleinheit emittiert wird, einer Chromatizität von Licht ähnlich ist, das von der Pixeleinheit vor dem Einstellen emittiert wurde;
wobei die Schwarzkörpertrajektorie eine Chromatizitätskurve eines Schwarzkörpers bei verschiedenen Temperaturen in einem CIE-Chromatizitätsdiagramm wiedergibt.

2. Verfahren nach Anspruch 1, bei welchem das Einstellen (S21) der Helligkeit anderer Sub-Pixel in der Pixeleinheit den folgenden Schritt aufweist:
Verringern (S211) der Helligkeit eines grünen Sub-Pixels, und/oder Erhöhen der Helligkeit eines roten Sub-Pixels in der Pixeleinheit.

3. Verfahren nach Anspruch 1 oder 2, ferner mit dem Schritt:
Deaktivieren (S3) des Augenschutzmodus, wenn festgestellt wird, dass der Bildschirm den Modus für geringe Helligkeit und/oder den Modus für geringes Umgebungslicht verlässt;
wobei das Feststellen (S3), dass der Bildschirm den Modus für geringe Helligkeit verlässt, die folgenden Schritte aufweist:
Feststellen (S31), dass der Bildschirm den Modus für geringe Helligkeit verlässt, wenn die erste Helligkeit erhöht wird, so dass sie höher als der erste voreingestellte Helligkeitsschwellenwert ist; und
Feststellen (S31), dass der Bildschirm den Modus für geringes Umgebungslicht verlässt, wenn die zweite Helligkeit erhöht wird, so dass sie höher als der zweite voreingestellte Helligkeitsschwellenwert ist.

4. Anzeigesteuerungsvorrichtung für einen Bildschirm mit:
einem Erkennungsmodul (11), das dazu ausgebildet ist, zu erkennen, ob der Bildschirm sich in einem Modus für geringe Helligkeit befindet, wenn eine erste Helligkeit des Bildschirms geringer als ein erster voreingestellter Helligkeitsschwellenwert ist, und ob der Bildschirm sich in einem Modus für geringes Umgebungslicht befindet, wenn eine zweite Helligkeit eines Umgebungslichts in einer Umgebung, in welcher der Bildschirm sich befindet, geringer als ein zweiter voreingestellter Helligkeitsschwellenwert ist; und
einem Einstellmodul (12), das dazu ausgebildet ist, einen Augenschutzmodus zu aktivieren, wenn die erste Helligkeit des Bildschirms geringer als der erste voreingestellte Helligkeitsschwellenwert ist und die Helligkeit des Umgebungslichts in der Umgebung, in welcher der Bildschirm sich befindet, geringer als der zweite voreingestellte Helligkeitsschwellenwert ist;
wobei
das Einstellmodul (12) dazu ausgebildet ist, die Helligkeit eines blauen Sub-Pixels in einer Pixeleinheit des Bildschirms zu aktivieren, und die Helligkeit eines oder mehrerer anderer Sub-Pixel in der Pixeleinheit entsprechend einer Schwarzkörpertrajektorie und der verringerten Helligkeit des blauen Sub-Pixels einzustellen, um die Helligkeit der Pixeleinheit um 10% bis 20% zu verringern und zu ermöglichen, dass eine Chromatizität von Licht, welches von der eingestellten Pixeleinheit emittiert wird, einer Chromatizität von Licht ähnlich ist, das von der Pixeleinheit vor dem Einstellen emittiert wurde;
wobei die Schwarzkörpertrajektorie eine Chromatizitätskurve eines Schwarzkörpers bei verschiedenen Temperaturen in einem CIE-Chromatizitätsdiagramm wiedergibt.

5. Vorrichtung nach Anspruch 4, bei welcher das Einstellmodul (12) ein Verringerungs-Sub-Modul (121) und/oder ein Erhöhungs-Sub-Modul (122) aufweist, wobei
das Verringerungs-Sub-Modul (121) dazu ausgebildet ist, die Helligkeit eines grünen Sub-Pixels in der Pixeleinheit zu verringern, wenn die Pixeleinheit nicht-weißes Licht emittiert; und
das Erhöhungs-Sub-Modul (122) dazu ausgebildet ist, die Helligkeit eines roten Sub-Pixels in der Pixeleinheit zu erhöhen, wenn die Pixeleinheit nicht-weißes Licht emittiert.

6. Vorrichtung nach Anspruch 4 oder 5, bei welcher
das Einstellmodul (12) ferner dazu ausgebildet ist, den Augenschutzmodus zu deaktivieren, wenn festgestellt wird, dass der Bildschirm den Modus für geringe Helligkeit und/oder den Modus für geringes Umgebungslicht verlässt,
wobei das Einstellmodul (12) ferner dazu ausgebildet ist, festzustellen, dass der Bildschirm den Modus für geringe Helligkeit verlässt, wenn die erste Helligkeit erhöht wird, so dass sie höher als der erste voreingestellte Helligkeitsschwellenwert ist; und festzustellen, dass der Bildschirm dem Modus für geringes Umgebungslicht verlässt, wenn die zweite Helligkeit erhöht wird, so dass die höher als der zweite voreingestellte Helligkeitswert ist.

## Revendications

1. Procédé de commande d'affichage pour un panneau d'affichage mis en oeuvre dans un dispositif de commande d'affichage, comprenant :
le fait de détecter (S1) si le panneau d'affichage est en mode de faible luminosité si une première luminosité du panneau d'affichage est inférieure à un premier seuil de luminosité prédéfini et si le panneau d'affichage est en mode de faible lumière ambiante si une seconde luminosité d'une lumière ambiante dans un environnement où le panneau d'affichage est situé est inférieure à un second seuil de luminosité prédéfini ; et
l'activation (S2) d'un mode de protection des yeux lorsque la première luminosité du panneau d'affichage est inférieure au premier seuil de luminosité prédéfini et que la luminosité de la lumière ambiante dans l'environnement où le panneau d'affichage est situé est inférieure au second seuil de luminosité prédéfini ;
dans lequel l'activation (S2) du mode de protection des yeux comprend :
la réduction (S21) de la luminosité d'un sous-pixel bleu dans une unité de pixel du panneau d'affichage, et le réglage de la luminosité d'un ou de plusieurs autres sous-pixels dans l'unité de pixel, selon une trajectoire de corps noir et une luminosité réduite du sous-pixel bleu pour réduire la luminosité de l'unité de pixel de 10 % à 20 % et pour permettre à une chromaticité de la lumière émise par l'unité de pixel réglée d'être similaire à une chromaticité de la lumière émise par l'unité de pixel avant le réglage ;
dans lequel la trajectoire du corps noir représente une courbe de chromaticité d'un corps noir à différentes températures dans un diagramme de chromaticité CIE.

2. Procédé selon la revendication 1, dans lequel le réglage (S21) de la luminosité d'autres sous-pixels dans l'unité de pixel comprend :
la réduction (S211) de la luminosité d'un sous-pixel vert dans l'unité de pixel et/ou l'augmentation de la luminosité d'un sous-pixel rouge dans l'unité de pixel.

3. Procédé selon la revendication 1 ou 2, comprenant en outre :
la désactivation (S3) du mode de protection des yeux lorsqu'il est déterminé que le panneau d'affichage quitte le mode de faible luminosité et/ou le mode de faible lumière ambiante ;
dans lequel la détermination (S3) du fait que le panneau d'affichage quitte le mode de faible luminosité comprend :
la détermination (S31) du fait que le panneau d'affichage quitte le mode de faible luminosité lorsque la première luminosité est augmentée pour être supérieure au premier seuil de luminosité prédéfini ; et
la détermination (S31) du fait que le panneau d'affichage quitte le mode de faible lumière ambiante lorsque la seconde luminosité est augmentée pour être supérieure au second seuil de luminosité prédéfini.

4. Dispositif de commande d'affichage pour un panneau d'affichage, comprenant :
un module de détection (11), configuré pour détecter si le panneau d'affichage est en mode de faible luminosité si une première luminosité du panneau d'affichage est inférieure à un premier seuil de luminosité prédéfini et si le panneau d'affichage est en mode de faible lumière ambiante si une seconde luminosité d'une lumière ambiante dans un environnement où le panneau d'affichage est situé est inférieure à un second seuil de luminosité prédéfini ; et
un module de réglage (12), configuré pour activer un mode de protection des yeux lorsque la première luminosité du panneau d'affichage est inférieure au premier seuil de luminosité prédéfini et que la luminosité de la lumière ambiante dans l'environnement où le panneau d'affichage est situé est inférieure au second seuil de luminosité prédéfini ;
où,
le module de réglage (12) est configuré pour, lors de l'activation du mode de protection des yeux, réduire la luminosité d'un sous-pixel bleu dans une unité de pixel du panneau d'affichage et régler la luminosité d'un ou de plusieurs autres sous-pixels dans l'unité de pixel, selon une trajectoire de corps noir et une luminosité réduite du sous-pixel bleu pour réduire la luminosité de l'unité de pixel de 10 % à 20 % et pour permettre à une chromaticité de la lumière émise par l'unité de pixel réglée d'être similaire à une chromaticité de la lumière émise par l'unité de pixel avant le réglage ;
dans lequel la trajectoire du corps noir représente une courbe de chromaticité d'un corps noir à différentes températures dans un diagramme de chromaticité CIE.

5. Dispositif selon la revendication 4, le module de réglage (12) comprenant un sous-module de réduction (121) et/ou un sous-module d'augmentation (122), dans lequel
le sous-module de réduction (121) est configuré pour réduire la luminosité d'un sous-pixel vert dans l'unité de pixel lorsque l'unité de pixel émet une lumière non blanche ; et
le sous-module d'augmentation (122) est configuré pour augmenter la luminosité d'un sous-pixel rouge dans l'unité de pixel lorsque l'unité de pixel émet une lumière non blanche.

6. Dispositif selon la revendication 4 ou 5, dans lequel
le module de réglage (12) est en outre configuré pour désactiver le mode de protection des yeux lorsqu'il est déterminé que le panneau d'affichage quitte le mode de faible luminosité et/ou le mode de faible lumière ambiante,
dans lequel le module de réglage (12) est en outre configuré pour déterminer que le panneau d'affichage quitte le mode de faible luminosité lorsque la première luminosité est augmentée pour être supérieure au premier seuil de luminosité prédéfini ; et déterminer que le panneau d'affichage quitte le mode de faible lumière ambiante lorsque la seconde luminosité est augmentée pour être supérieure au second seuil de luminosité prédéfini.
